# EUROPEAN PATENT SPECIFICATION

(11) **EP 2 401 538 B1**
(45) Date of publication and mention of the grant of the patent: **19.06.2019**
(21) Application number: 10706066.7
(22) Date of filing: 25.02.2010
(51) Int. Cl.: F16L 11/118, F16L 19/02, F24H 9/12

(54) **ARRANGEMENT FOR CONNECTING A HEATING BOILER TO CONDUITS**
ANORDNUNG ZUM ANSCHLUSS EINES HEIZKESSELS AN LEITUNGEN
AGENCEMENT POUR CONNECTER UNE CHAUDIÈRE DE CHAUFFAGE À DES CONDUITS

(30) Priority: 25.02.2009 NL 1036634
(43) Date of publication of application: 04.01.2012
(73) Proprietor: DRL Products B.v., 4817 ZM Breda (NL)
(72) Inventor: DE RUIJTER, Paul, Leonard, NL-4818 BW Breda (NL)
(74) Representative: Griebling, Onno
(86) International application number: PCT/NL2010/000030
(87) International publication number: WO 2010/098657

(56) References cited:
- DE-A1- 10 252 428
- DE-U1- 8 905 272
- DE-U1- 20 219 344
- DE-U1-202006 005 545
- FR-A1- 2 303 225
- GB-A- 1 059 220
- US-A- 5 829 483
- US-A1- 2007 079 885
- US-B1- 6 318 410

## Description

The present invention relates in genera! to mounting and replacing heating boilers.

When a heating boiler is to be mounted, a connection has to be made between the connection points of the heating boiler and the connection points of the installation already present. Particularly when the heating boiler serves as replacement of an existing heating boiler, it may happen that there is a discrepancy between the positions of the several connection points. Then, it takes the installer relatively much time, and therefore is relatively expensive, to make several connection pipes to measure. Despite the fact that this problem has already been known for a long time, industry has not yet succeeded in offering a solution.

An important objective of the present invention is to reduce this problem.

To this end, the present invention provides an arrangement in accordance with claim 1.

It is noted that GB-1.499.853 describes a flexible metal tube unit. However, this is not an extendable tube, i.e. the length is fixed. Further, the end parts of this known tube are not suitable for accommodating squeeze fittings.

US-6318410 discloses an arrangement for connecting a filler hose or air hose, in an automobile, to a mating pipe having an edge bent back over 180°. The hose is blow-formed of a resin material, and its end is provided with a connection cylinder arranged around the hose end. The outside of the hose end portion and the inside of the connection cylinder have mating shapes such as to obtain axial engagement. Sealing is obtained by internal pressure pressing the hose against the connection cylinder, which in turn is provided with hooked arms for engaging the curled edge of the mating pipe. At its outside, the connection cylinder is provided with sealing rings in circumferential grooves, which sealing rings will about the inner surface of the mating pipe. This arrangement is not for cooperation with the nut and ring of a squeeze fitting.

DE-20219344-U1 discloses a flexible, bellows-shaped tube with integral connection portion having a straight shape.

DE-10252428-A1 discloses a heating apparatus having flexible input/output connection tubes, of which the ends are connected to a common connection plate. The connection plate can hinge between a vertical orientation (for having the input/output connection tubes be directed horizontally) and a horizontal orientation (for having the input/output connection tubes be directed vertically).

US-5829483 discloses a double-walled flexible hose made of rubber and resin.

DE-202006005545-U1 discloses a flexible hose of a plastic material, having a straight end portion. The end portion of this hose is clamped to a connector having a corrugated outer surface, while a support ring is arranged at the outside of the flexible hose.

The above and other aspects, features and advantages of the present invention will be further clarified by the following description with reference to the drawings, in which same reference numerals indicate same or similar parts, wherein indications "below/above", "higher/lower", "left/right" etcetera only relate to the orientation shown in the figures, and in which:
figure 1 schematically shows an existing situation of a heating boiler;
figure 2 schematically shows the same situation when the heating boiler and the coupling tubes have been removed;
figure 3 schematically shows the same situation, now with a new boiler in place but still without coupling tubes;
figure 4 schematically shows a coupling tube proposed by the present invention;
figure 4B schematically shows a detail of a preferred embodiment of a coupling tube proposed by the present invention;
figure 5 schematically shows the situation of figure 3, wherein now the new boiler has been connected by means of the coupling tubes proposed by the present invention.

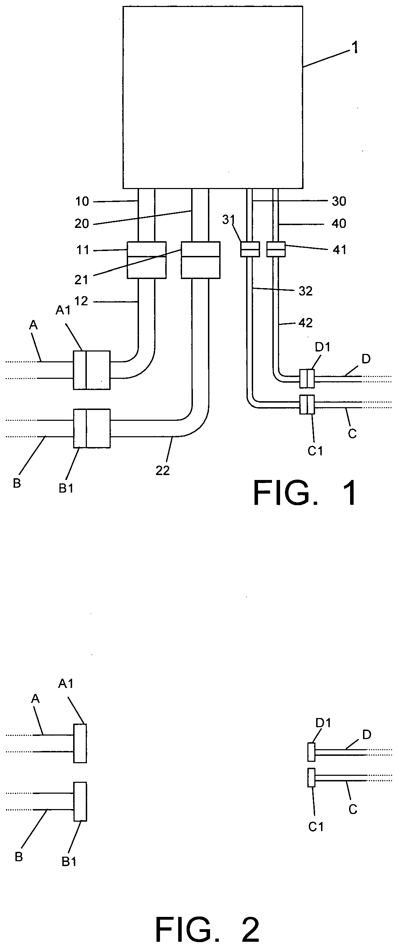

Figure 1 schematically shows an existing situation of a heating boiler 1, through conduits A and B connected to a network for central heating, and through conduits C and D connected to a warm water supply for warm tap water, not shown for sake of simplicity. Normally, the conduits A and B have dimensions differing from the dimensions of the conduits C and D. The heating boiler 1 has connection conduits 10, 20, 30, 40 with respective coupling ends 11, 21, 31, 41. The conduits A, B, C, D have respective coupling ends A1, B1, C1, D1. A connection tube segment 12 is on the one hand connected to conduit A and on the other hand connected to connection conduit 10, to thus connect connection conduit 10 to conduit A. Similarly, there are connection tube segments 22, 32, 42 for the connection conduits 20, 30, 40, respectively. All these connection tube segments are rigid pipes and have, in those times of installing the heating boiler 1, been made to measure by the installer by sawing and bending, it being noted that bending rigid pipes requires heavy tools. These connection tube segments are smooth tubes with a cylindrical outer surface, and are coupled to the coupling ends 11, 21, 31, 41 and the coupling ends A1, B1, C1, D1, respectively, by squeeze fittings.

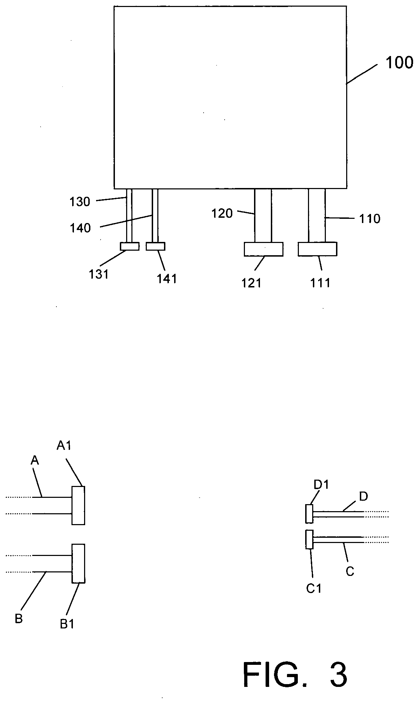

When this heating boiler is to be replaced, first the heating boiler 1 as well as the connection tube segments 12, 22, 32, 42 are removed (see figure 2), and then a new heating boiler 100 is placed (see figure 3). This new heating boiler 100 has connection conduits 110, 120, 130, 140 with respective coupling ends 111, 121, 131, 141. Here, it may happen, as figure 3 illustrates, that these new connection conduits 110, 120, 130, 140 are located in a different position as compared to the original connection conduits 10, 20, 30, 40, so that the original connection tube segments 12, 22, 32, 42 can no longer be used. According to the state of the art, the installer would now have to make to measure new connection tube segments on site.

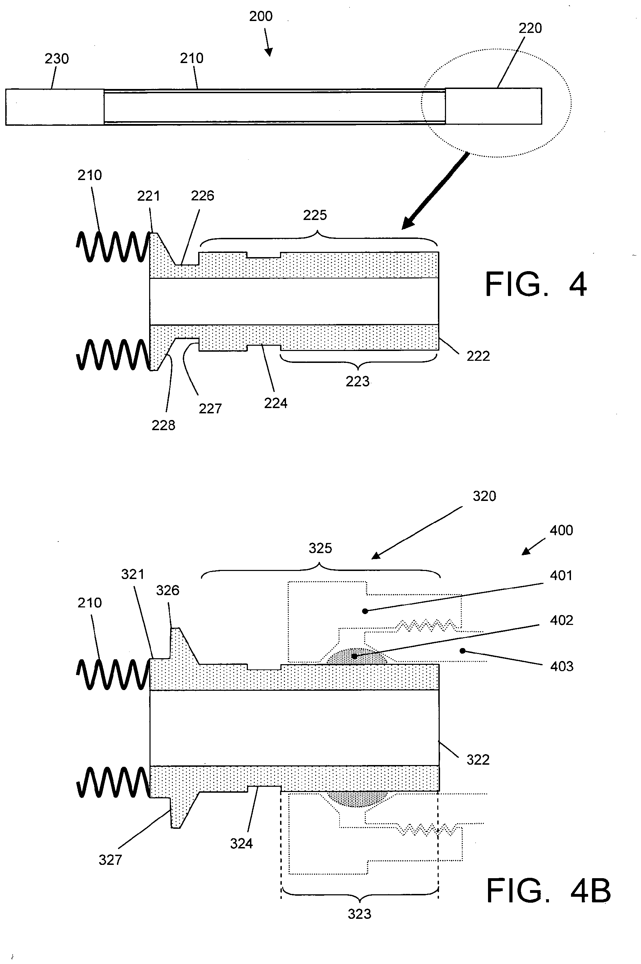

Figure 4 illustrates a connection tube segment 200 proposed by the present invention. A central portion of the connection tube segment 200 consists of a stainless steel flexible and extendable tube 210 of which the wall has a bellows-shaped design, i.e. the diameter of the tube varies over the length regularly between a larger outer diameter and a smaller inner diameter. Such flexible tube is known per se. Rigid pipe pieces 220, 230 are attached to the ends of the central tube portion 210, also made of stainless steel, with a smooth outer surface, and of which the length is about 4 cm, so that this tube part is suitable for being coupled by means of a standard squeeze fitting.

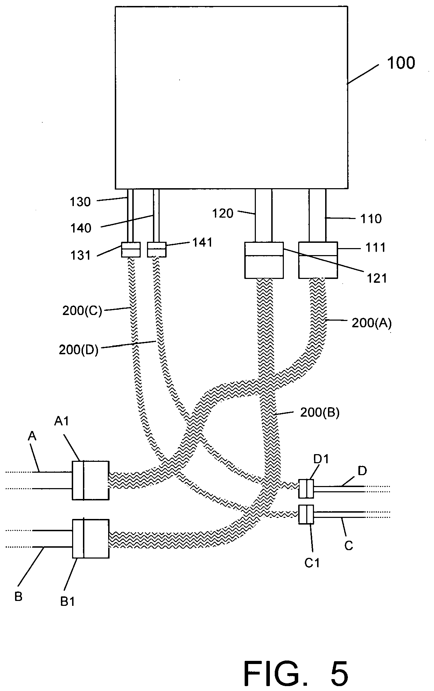

In a possible embodiment, the central tube portion 210 has a length of about 30 cm. By exerting an axial pulling force on the central tube portion, the length can continuously be increased to maximally about 60 cm. By exerting an axial pressing force, the length can also be reduced again. Thus the length of the tube segment 200 can be adapted to the circumstances in an easy manner. Furthermore, the central tube portion can easily be bent to a bend of 90°. Thus it is possible to make the coupling of the new heating boiler 100 with the existing conduits A, B, C, D by standard connection tube segments 200 manufactured in advance, as illustrated in figure 5, wherein the length and possible bends of the connection tube segments can easily be made on site. Obviously, there will be connection tube segments with different diameters, corresponding to the diameters of the several conduits.

Preferably, the connection tube segments are provided with a plastic sheath shrunk around it.

The enlargement of figure 4 shows in more detail an embodiment of the connection between the central tube portion 210 and a rigid tube portion 220. The rigid pipe piece 220 has a coupling end 221 and an opposite free end 222. Seen from the free end 222, the rigid pipe piece 222 has a pipe section 225 with a smooth cylindrical outer surface. In this outer surface, at some distance from the free end 222, two radially opposite recesses 224 are preferably arranged with mutually parallel bottom, so that a tool such as a fork spanner can engage thereon. The section part 223 between the free end 222 and these recesses 224 must be long enough for placing a squeeze ring of a squeeze fitting.

Beyond the pipe section 225, the rigid pipe piece 220 is provided with a neck section 226 having an outer diameter smaller than the outer diameter of the pipe section 225. Here, the pipe section 225 has a shoulder onto which a tool can engage in order to pull the two pipe pieces 220, 230 axially away from each other in order to extend the flexible tube 210.

The coupling end 221 has a diameter equal to the outer diameter of the flexible tube 210, and preferably larger than the outer diameter of the cylindrical pipe section 225. The transition from the coupling end 221 to the neck section 226 preferably takes place through a tapered transition part 228.

A method proposed by the present invention for connecting the rigid pipe piece 220 and the flexible tube 210 to each other is as follows. First, the flexible tube 210 is sawed through or cut through at the location of a part with the maximum diameter. Or the sawing/cutting takes place at the location of a part with the minimum diameter, after which a part of the end is turned away to the maximum diameter. Then, the coupling end 221 of the rigid pipe piece 220 is welded against the end of the flexible tube.

In the embodiment as illustrated in the detail of figure 4, the inner diameter of the rigid pipe piece 220 is shown as being smaller than the inner diameter of the flexible tube 210. For an improved circulation, it is desirable that the inner diameter of the rigid pipe piece 220 is about as large as the inner diameter of the flexible tube 210, or perhaps even somewhat larger. Figure 4B illustrates a preferred embodiment variation of the rigid tube part, indicated by reference numeral 320, offering this advantage.

From the free end 322, the rigid pipe piece 320 first has a pipe piece part 323 with a smooth, cylindrical outer surface, of which the length is large enough for placing a squeeze ring of a squeeze fitting 400. For the sake of clarity, such squeeze ring 402 is shown by a dotted line in figure 4B, and the same applies to the required nut 401 fitting to the connection 403.

Although this is not essential, it is preferred that the rigid pipe piece 320, beyond the pipe piece part 323, is provided with two radially opposite recesses 324 with mutually parallel bottom in its outer surface, so that a tool such as a fork spanner can engage there. At the coupling end 321 opposite the free end 322, the rigid pipe piece 320 is welded to the flexible tube 310; preferably, both the flexible tube 310 and the rigid pipe piece 320 are made from stainless steel that is weldable well.

For expanding the flexible tube part 210, a substantial axial force must be exerted on the rigid pipe pieces 220; 320. This force can be exerted by human hands, but it is difficult to have sufficient grip because of the smooth outer surface. Preferably therefore, the rigid pipe pieces 220; 320 are provided with a shoulder onto which a tool can engage for exerting axial pulling force. The recesses 224; 324 are not suitable for this. In the case of the embodiment illustrated in figure 4, such shoulder 227 is formed by a (cylindrical) neck section 226, i.e. a section with an outer diameter smaller than the outer diameter of the adjacent pipe section 225. In the embodiment of figure 4B, a shoulder 327 is defined by a radial flange 326, i.e. a ring-shaped part with larger outer diameter than the outer diameter of the adjacent pipe section 325. A combination of these features is also possible, i.e. a neck section with reduced outer diameter being present between the coupling end 321 and the radial flange 326.

Figure 4B shows an axial distance between the radial flange 326 and the recesses 324; however this is not essential, it is also possible that the recesses 324 connect directly to the radial flange 326.

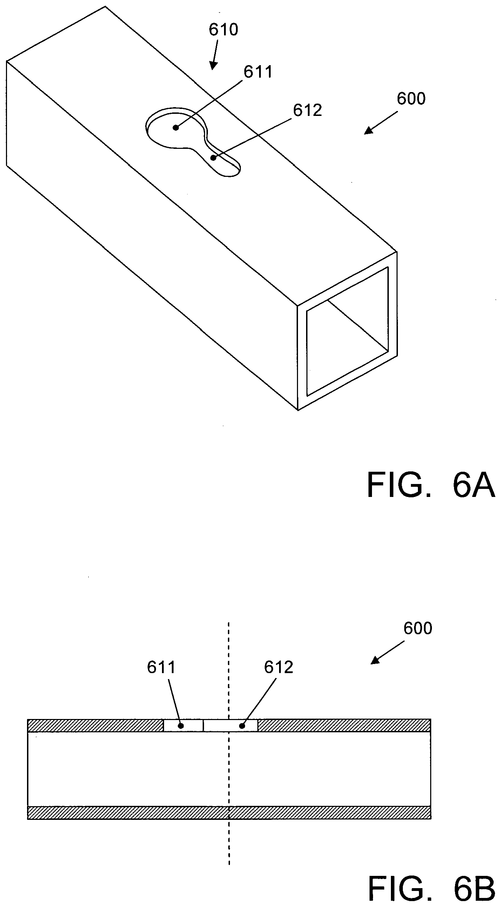

Further, the invention provides the use of a simple tool for exerting the required axial pulling force. Figure 6A shows a schematic perspective view thereof, while figure 6B shows a schematic longitudinal section. The tool 600 is formed as a hollow pipe segment with a rectangular cross section contour. In one wall 601, a hole 610 is arranged having a contour in the shape of a keyhole, i.e. the combination of a circular hole part 611 and an elongate hole part 612 connecting thereto, while the longitudinal direction of the elongate hole part 612 is parallel to the longitudinal direction of the pipe segment. The diameter of the circular hole part 611 corresponds to the diameter of the flange 326. The width of the elongate hole part 612 is smaller than the diameter of the circular hole part 611 and corresponds for instance to the diameter of the coupling end 321. The inner diameter of the tool 600 corresponds to the length of the rigid pipe piece 320. Before use, the rigid pipe piece 320 is inserted into the circular hole part 611 until the flange 326 has passed the circular hole part 611, and then the rigid pipe piece 320 is displaced sideways into the elongate hole part 612: then the flange 326 lies behind the edges of the elongate hole part 612. With a second identical tool, this is also done with the other end part 320 of the tube 200. Now it is possible to have two hands engage one of these tools while one stands with one's feet on the other tool. In that case it is preferred that the elongate hole part 612 is aligned with the longitudinal centre of the tool 600, as shown in figure 6B.

If desired, it is possible that comparable holes are arranged in two, three or four of the walls of the tool 600, with mutually equal or even mutually different dimensions for use with tubes of different diameters.

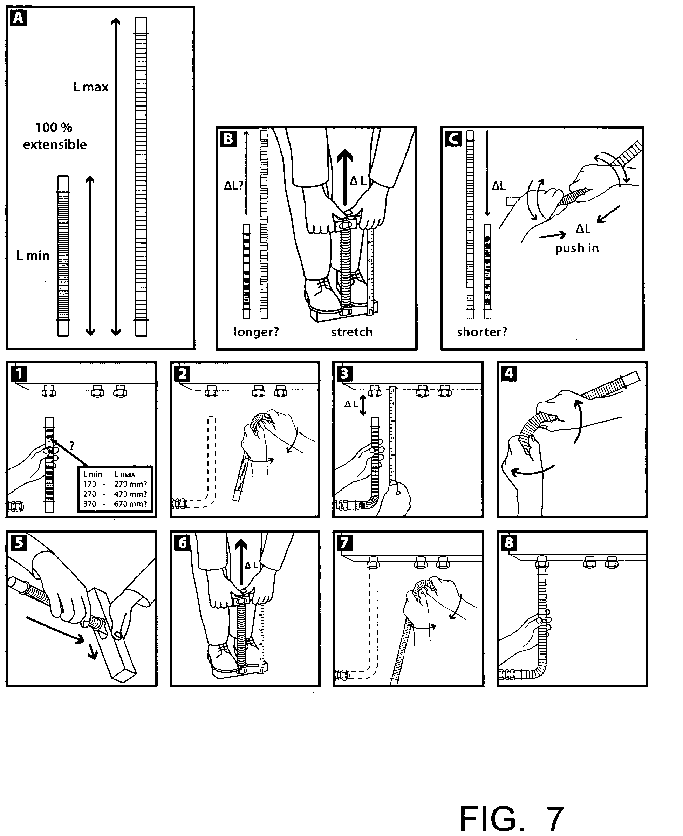

Figure 7 illustrates the particular advantages of the invention. At [A] is shown that the tube segment has a variable length that can be adjusted between a minimum length Lmin and a maximum length Lmax twice as large as the minimum length Lmin. At [B] is shown that an extension can be achieved by exerting an axial pulling force using the tool 600 discussed with reference to figure 6. At [C] is shown that a shortening can be achieved by achieving an axial pushing force.

In practice, tube segments according to the present invention will be available in different standard lengths and standard diameters. In a practical situation, therefore, it is first determined which length and diameter are required [1]. A tube segment is bent in the correct shape [2], and the service man measures how much length he is missing [3]. The tube segment is bent straight again [4], having its ends inserted into tools 600 [5], and the service man pulls the tube segment until the desired extension has been achieved [6]. Then, the tube segment is bent in the correct shape again [7] and arranged in its place [8], after which the nuts of the squeeze fittings can be tightened.

It will be clear for a person skilled in the art that the invention is not limited to the exemplary embodiments discussed in the above, but that several variations and modifications are possible within the protective scope of the invention as defined in the attached claims. For instance, it is possible that the coupling tube segment is made from another material. It is further noted that, in the context of the present invention, so called press fittings are considered as being covered by the phrase "squeeze fitting".

Features that have only been described for a certain embodiment are also applicable with other described embodiments. Features of different embodiments can be combined to achieve another embodiment. Features that have not explicitly been described as being essential can also be omitted.

The reference numerals used in the claims only serve for clarification when understanding the claims in the context of the described exemplary embodiments, and should not be interpreted in any limiting sense.

## Claims

1. Arrangement for connecting a heating boiler (1) to conduits (A, B) for central heating and/or conduits (C, D) for warm tap water, wherein the boiler and/or said conduits are provided with respective coupling ends (11, 21, 31, 41; A1, B1, C1, D1; 403) suitable for coupling with a nut (401) of a squeeze fitting (400);
wherein said arrangement comprises:
- at least one squeeze fitting (400) with a nut (401) and a ring (402);
- at least one connection tube segment (200); wherein the connection tube segment (200) has a central part (210) formed as a flexible and extendable tube, which central tube part (210) can be continuously extended or shortened under the influence of an axial pulling force or pressing force;
and wherein both ends of the connection tube segment (200), are implemented as a rigid pipe piece (220, 230; 320) having a free end (222; 322) and being attached to this central flexible and extendable tube part (210), which pipe piece has a pipe segment (223; 323) connecting to this free end (222; 322) with a smooth cylindrical outer surface and a length sufficient for placing said ring (402);
wherein the rigid pipe piece (220; 320) has a pipe segment (225; 325) with a smooth, cylindrical outer surface extending from a free end (222; 322);
wherein, opposite the free end (222; 322), the rigid pipe piece (220; 320) has a coupling end (221; 321) attached to the central tube part (210),
wherein the coupling end (221; 321) preferably has an outer diameter equal to or somewhat larger than the outer diameter of the central tube part (210);
and wherein, between the coupling end (221; 321) and the smooth pipe segment (225; 325), the connection tube segment has a shoulder (227; 327) onto which a tool (600) can engage for exerting an axial pulling force on the central tube part (210);
wherein either:
between the coupling end (221) and the smooth pipe segment (225), the rigid pipe piece (220) is provided with a neck section (226) having an outer diameter smaller than the outer diameter of the pipe segment (225), wherein said shoulder (227) is at the transition of the smooth pipe segment (225) to the neck section (226);
or:
between the coupling end (321) and the smooth pipe segment (325), the rigid pipe piece (320) is provided with a flange (326), wherein said shoulder (327) is on the side of said flange (326) directed to the coupling end (321).

2. Arrangement according to claim 1, wherein the connection tube segment (200) is made of stainless steel.

3. Arrangement according to claim 1 or 2, wherein the flexible and extendable central tube part (210) has a wall with a bellows-shaped design.

4. Arrangement according to any of the previous claims, wherein the length of the central tube part, under the influence of an axial force, can be continuously set between a minimum length Lmin and a maximum length Lmax that is at least twice as large as the minimum length Lmin.

5. Arrangement according to any of the previous claims, wherein the central tube part can easily be bent to a bend of 90°.

6. Arrangement according to any of the previous claims, wherein the central tube part is provided with a plastic sheath shrunk around it.

7. Arrangement according to any of the previous claims, wherein said rigid pipe piece (220) is provided with said neck section (226) having an outer diameter smaller than the outer diameter of the pipe segment (225),
wherein the coupling end (221) has an outer diameter larger than the pipe segment (225), and wherein a tapered transition part (228) is present between the coupling end (221) and the neck section (226).

8. Arrangement according to any of the previous claims wherein, at some distance from the free end (222; 322), at least two radially opposite recesses (224; 324) with mutually parallel bottom are arranged in the outer surface of the smooth pipe segment (225; 325).

9. Arrangement according to any of the previous claims wherein the rigid pipe piece (220; 320) has an inner diameter corresponding to the inner diameter of the central tube part (210).

10. Arrangement according to any of the previous claims wherein the rigid pipe piece (220; 320) is made as a one-piece component.

11. Use of a tool (600) for exerting an axial pulling force on the central tube part (210) of a connection tube segment (200) of the arrangement according to any of the previous claims, which tool is implemented as a hollow tube with a rectangular cross section profile, wherein in at least one of the walls a hole (610) having a keyhole profile is arranged, the hole (610) comprising a first circular hole part (611) and a second elongate hole part (612), wherein the width of the second elongate hole part (612) is smaller than the outer diameter of the shoulder (227; 327) of the rigid pipe piece (220; 320) of the connection tube segment (200).

12. Method for attaching together the rigid pipe piece (220) and the flexible tube (210) of a connection tube segment (200) of the arrangement according to any of the previous claims, the method comprising the steps of:
providing a flexible tube;
sawing or cutting this tube at the location of a part with the maximum diameter, or finishing the end obtained by sawing or cutting until the resulting end has a diameter equal to the maximum outer diameter of the tube;
welding the coupling end (221) of the rigid pipe piece (220) to the thus obtained end of the flexible tube.

## Patentansprüche

1. Anordnung zum Anschließen eines Heizboilers (1) an Leitungen (A, B) für eine Zentralheizung und/oder Leitungen (C, D) für warmes Leitungswasser, wobei der Boiler und/oder die Leitungen mit entsprechenden Anschlussenden (11, 21, 31, 41; A1, B1, C1, DI; 403) versehen sind, die zum Verbinden mit einer Mutter (401) eines Pressfittings (400) geeignet sind; wobei die Anordnung umfasst:
- mindestens ein Pressfitting (400) mit einer Mutter (401) und einem Ring (402);
- mindestens ein Verbindungsrohrsegment (200);
wobei
das Verbindungsrohrsegment (200) einen Mittelteil (210) hat, der als flexibles und ausziehbares Rohr ausgebildet ist, wobei der mittlere Rohrteil (210) unter dem Einfluss einer axialen Zugkraft oder Druckkraft kontinuierlich erweitert oder gekürzt werden kann;
und wobei beide Enden des Verbindungsrohrsegmentes (200) als starres Rohrstück (220, 230; 320) implementiert sind, die ein freies Ende (222; 322) haben und an diesem mittleren flexiblen und ausziehbaren Rohrteil (210) befestigt sind, wobei das Rohrstück ein Rohrsegment (223, 323) hat, das mit diesem freien Ende (222, 322) mit einer glatten zylindrischen Außenfläche und einer Länge verbindet, die zum Platzieren des Rings (402) ausreichend ist; wobei das starre Rohrstück (220, 320) ein Rohrsegment (225, 325) mit einer glatten, zylindrischen Außenfläche hat, die sich von einem freien Ende (222, 322) aus erstreckt;
wobei gegenüber dem freien Ende (222, 322) das starre Rohrstück (220, 320) ein Anschlussende (221, 321) hat, das an dem mittleren Rohrteil (210) befestigt ist,
wobei das Anschlussende (221, 321) vorzugsweise einen Außendurchmesser hat, der gleich dem Außendurchmesser des mittleren Rohrteils (210) oder etwas größer ist;
und wobei zwischen dem Anschlussende (221, 321) und dem glatten Rohrsegment (225, 325) das Verbindungsrohrsegment eine Schulter (227, 327) hat, auf der ein Werkzeug (600) zum Ausüben einer axialen Zugkraft auf den mittleren Rohrteil (210) angreifen kann; wobei entweder:
zwischen dem Anschlussende (221) und dem glatten Rohrsegment (225) das starre Rohrstück (220) mit einem Halsabschnitt (226) versehen ist, der einen Außendurchmesser hat, der kleiner als der Außendurchmesser des Rohrsegmentes (225) ist, wobei die Schulter (227) an dem Übergang des glatten Rohrsegmentes (225) zu dem Halsabschnitt (226) liegt;
oder:
zwischen dem Anschlussende (321) und dem glatten Rohrsegment (325) das starre Rohrstück (320) mit einem Flansch (326) versehen ist, wobei die Schulter (327) auf der Seite des Flansches (326) liegt, die zu dem Anschlussende (321) gerichtet ist.

2. Anordnung nach Anspruch 1, wobei das Verbindungsrohrsegment (200) aus rostfreiem Stahl hergestellt ist.

3. Anordnung nach Anspruch 1 oder 2, wobei der flexible und ausziehbare mittlere Rohrteil (210) eine Wand mit einem balgenförmigen Aufbau hat.

4. Anordnung nach einem der vorherigen Ansprüche, wobei die Länge des mittleren Rohrteiles unter dem Einfluss einer axialen Kraft kontinuierlich zwischen einer minimalen Länge Lmin und einer maximalen Länge Lmax eingestellt werden kann, die mindestens doppelt so groß wie die minimale Länge Lmin ist.

5. Anordnung nach einem der vorherigen Ansprüche, wobei der mittlere Rohrteil leicht zu einem Bogen von 90° gebogen werden kann.

6. Anordnung nach einem der vorherigen Ansprüche, wobei der mittlere Rohrteil mit einer darum geschrumpften Plastikhülle versehen ist.

7. Anordnung nach einem der vorherigen Ansprüche, wobei das starre Rohrstück (220) mit dem Halsabschnitt (226) versehen ist, der einen Außendurchmesser hat, der kleiner als der Außendurchmesser des Rohrsegmentes (225) ist,
wobei das Anschlussende (221) einen Außendurchmesser hat, der größer als das Rohrsegment (225) ist, und wobei ein verjüngter Übergangsteil (228) zwischen dem Anschlussende (221) und dem Halsabschnitt (226) vorhanden ist.

8. Anordnung nach einem der vorherigen Ansprüche, wobei in einem Abstand von dem freien Ende (222; 322) mindestens zwei radial gegenüberliegende Vertiefungen (224; 324) mit wechselseitig parallelem Boden in der Außenfläche des glatten Rohrsegmentes (225; 325) angeordnet sind.

9. Anordnung nach einem der vorherigen Ansprüche, wobei das starre Rohrstück (220; 320) einen Innendurchmesser hat, der dem Innendurchmesser des mittleren Rohrteiles (210) entspricht.

10. Anordnung nach einem der vorherigen Ansprüche, wobei das starre Rohrstück (220; 320) als eine einteilige Komponente hergestellt ist.

11. Verwendung eines Werkzeugs (600) zum Ausüben einer axialen Zugkraft auf den mittleren Rohrteil (210) eines Verbindungsrohrsegmentes (200) der Anordnung nach einem der vorherigen Ansprüche, wobei das Werkzeug als hohles Rohr mit einem rechteckigen Querschnittsprofil implementiert ist, wobei in mindestens einer der Wände ein Loch (610), das ein schlüssellochförmiges Profil hat, angeordnet ist, wobei das Loch (610) einen ersten kreisförmigen Lochteil (611) und einen zweiten länglichen Lochteil (612) umfasst, wobei die Breite des zweiten länglichen Lochteils (612) kleiner als der Außendurchmesser der Schulter (227; 327) des starren Rohrstücks (220; 320) des Verbindungsrohrsegmentes (200) ist.

12. Verfahren zum Befestigen des starren Rohrstücks (220) und des flexiblen Rohres (210) eines Verbindungsrohrsegmentes (200) der Anordnung nach einem der vorherigen Ansprüche aneinander, wobei das Verfahren die Schritte umfasst:
Bereitstellen eines flexiblen Rohres;
Sägen oder Schneiden dieses Rohres an der Stelle eines Teils mit dem maximalen Durchmesser, oder Endbearbeitung des Endes, das durch Sägen oder Schneiden erhalten wurde, bis das resultierende Ende einen Durchmesser hat, der gleich dem maximalen Außendurchmesser des Rohres ist;
Anschweißen des Anschlussendes (221) des starren Rohrstücks (220) an das so erhaltene Ende des flexiblen Rohrs.

## Revendications

1. Dispositif pour connecter une chaudière (1) à des conduites (A, B) de chauffage central et/ou des conduites (C, D) d'eau chaude sanitaire, dans lequel la chaudière et/ou lesdites conduites sont pourvues d'extrémités de raccordement respectives (11, 21, 31, 41 ; A1, B1, C1, D1 ; 403) appropriées pour s'accoupler avec un écrou (401) d'un raccord à compression (400) ;
dans lequel ledit dispositif comprend :
- au moins un raccord à compression (400) comportant un écrou (401) et une bague (402) ;
- au moins un segment de tube de connexion (200) ;
dans lequel le segment de tube de connexion (200) comporte une partie centrale (210) sous la forme d'un tube flexible et extensible, laquelle partie tubulaire centrale (210) peut être étendue ou raccourcie en continu sous l'influence d'une force de traction ou de pression axiale ;
et dans lequel les deux extrémités du segment de tube de connexion (200) se présentent sous la forme d'un tronçon de tuyau rigide (220, 230 ; 320) ayant une extrémité libre (222 ; 322) et qui est fixé à cette partie centrale de tube flexible et extensible (210), lequel tronçon de tuyau a un segment de tuyau (223 ; 323) qui se connecte à cette extrémité libre (222 ; 322) avec une surface extérieure cylindrique lisse et une longueur suffisante pour placer ladite bague (402) ;
dans lequel le tronçon de tuyau rigide (220 ; 320) a un segment de tuyau (225 ; 325) avec une surface extérieure cylindrique lisse qui s'étend depuis une extrémité libre (222 ; 322) ;
dans lequel, à l'opposé de l'extrémité libre (222 ; 322), le tronçon de tuyau rigide (220 ; 320) a une extrémité de raccordement (221 ; 321) fixée à la partie tubulaire centrale (210),
dans lequel l'extrémité de raccordement (221 ; 321) a de préférence un diamètre extérieur égal ou légèrement supérieur au diamètre extérieur de la partie tubulaire centrale (210) ;
et dans lequel, entre l'extrémité de raccordement (221 ; 321) et le segment de tuyau lisse (225 ; 325), le segment de tube de connexion comporte un épaulement (227 ; 327) sur lequel un outil (600) peut prendre appui pour exercer une force de traction axiale sur la partie tubulaire centrale (210) ;
dans lequel soit :
entre l'extrémité de raccordement (221) et le segment de tuyau lisse (225), le tronçon de tuyau rigide (220) est pourvu d'une section de col (226) ayant un diamètre extérieur inférieur au diamètre extérieur du segment de tuyau (225), dans lequel ledit épaulement (227) se trouve à la transition du segment de tuyau lisse (225) avec la section de col (226) ;
soit :
entre l'extrémité de raccordement (321) et le segment de tuyau lisse (325), le tronçon de tuyau rigide (320) est pourvu d'une bride (326), dans lequel ledit épaulement (327) se trouve du côté de ladite bride (326) orienté vers l'extrémité de raccordement (321).

2. Dispositif selon la revendication 1, dans lequel le segment de tube de connexion (200) est en acier inoxydable.

3. Dispositif selon la revendication 1 ou 2, dans lequel la partie centrale de tube flexible et extensible (210) a une paroi en forme de soufflet.

4. Dispositif selon l'une quelconque des revendications précédentes, dans lequel la longueur de la partie tubulaire centrale, sous l'influence d'une force axiale, peut être réglée en continu entre une longueur minimale Lmin et une longueur maximale Lmax qui est au moins deux fois plus grande que la longueur minimale Lmin.

5. Dispositif selon l'une quelconque des revendications précédentes, dans lequel la partie tubulaire centrale peut être aisément courbée pour former un coude à 90°.

6. Dispositif selon l'une quelconque des revendications précédentes, dans lequel la partie tubulaire centrale est pourvue d'une gaine en plastique rétractée autour de celle-ci.

7. Dispositif selon l'une quelconque des revendications précédentes, dans lequel ledit tronçon de tuyau rigide (220) est pourvu de ladite section de coI (226) ayant un diamètre extérieur inférieur au diamètre extérieur du segment de tuyau (225),
dans lequel l'extrémité de raccordement (221) a un diamètre extérieur plus grand que le segment de tuyau (225), et dans lequel une partie de transition à rétrécissement (228) est présente entre l'extrémité de raccordement (221) et la section de col (226).

8. Dispositif selon l'une quelconque des revendications précédentes, dans lequel, à une distance de l'extrémité libre (222 ; 322), au moins deux évidements radialement opposés (224 ; 324) avec des fonds mutuellement parallèles sont formés dans la surface extérieure du segment de tuyau lisse (225 ; 325).

9. Dispositif selon l'une quelconque des revendications précédentes, dans lequel le tronçon de tuyau rigide (220 ; 320) a un diamètre intérieur qui correspond au diamètre intérieur de la partie tubulaire centrale (210).

10. Dispositif selon l'une quelconque des revendications précédentes, dans lequel le tronçon de tuyau rigide (220 ; 320) se présente sous la forme d'un composant monobloc.

11. Utilisation d'un outil (600) pour exercer une force de traction axiale sur la partie tubulaire centrale (210) d'un segment de tube de connexion (200) du dispositif selon l'une quelconque des revendications précédentes, lequel outil est mis en oeuvre sous la forme d'un tube creux de section rectangulaire, dans lequel dans au moins l'une des parois un trou (610) ayant un profil de trou de serrure est formé, le trou (610) comprenant une première partie de trou circulaire (611) et une deuxième partie de trou de forme allongée (612), la largeur de la deuxième partie de trou allongée (612) étant inférieure au diamètre extérieur de l'épaulement (227 ; 327) du tronçon de tuyau rigide (220 ; 320) du segment de tube de connexion (200).

12. Procédé permettant de relier le tronçon de tuyau rigide (220) au tube flexible (210) d'un segment de tube de connexion (200) du dispositif selon l'une quelconque des revendications précédentes, le procédé comprenant les étapes suivantes :
fournir un tube flexible ;
scier ou couper ce tube au niveau d'une partie ayant le diamètre maximal, ou réaliser une finition de l'extrémité obtenue par sciage ou coupe jusqu'à ce que l'extrémité résultante ait un diamètre égal au diamètre extérieur maximal du tube ;
souder l'extrémité de raccordement (221) du tronçon de tuyau rigide (220) à l'extrémité du tube flexible ainsi obtenue.
